(19) Europäisches Patentamt
European Patent Office
Office européen des brevets

(11) **EP 1 191 481 A2**

(12) **EUROPÄISCHE PATENTANMELDUNG**

(43) Veröffentlichungstag:
**27.03.2002 Patentblatt 2002/13**

(51) Int Cl.7: **G06T 7/00**

(21) Anmeldenummer: **01122338.5**

(22) Anmeldetag: **19.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.09.2000 DE 10047211**

(71) Anmelder: **Leica Microsystems Wetzlar GmbH**
**35578 Wetzlar (DE)**

(72) Erfinder:
• **Rinn, Klaus, Dr.**
**35452 Heuchelheim (DE)**

• **Fricke, Wolfgang**
**35583 Wetzlar (DE)**
• **Wienecke, Joachim, Dr.**
**07747 Jena (DE)**

(74) Vertreter: **Reichert, Werner F., Dr.**
**Leica Microsystems AG,**
**Corporate Patents + Trademarks Department,**
**Ernst-Leitz-Strasse 17-37**
**35578 Wetzlar (DE)**

(54) **Verfahren und Messgerät zur Positionsbestimmung einer Kante eines Strukturelementes auf einem Substrat**

(57) Es werden ein Verfahren und ein Messgerät zur Positionsbestimmung einer zu vermessenden Kante an einer Struktur auf einem Substrat angegeben. Es wird ein vollständiges nichtlineares, eine zu vermessende Kante identifizierendes Modell-Intensitätsprofil einer Modell-Kante ermittelt und abgespeichert und darin eine gewünschte Kantenposition $x_k$ mit Subpixel-Genau-igkeit definiert. Es wird ein Kamerabild des Substrats mit der zu vermessenden Kante aufgenommen und daraus ein ein-dimensionales Mess-Intensitätsprofil der zu vermessenden Kante bestimmt. Im Mess-Intensitätsprofil wird das Modell-Intensitätsprofil mit Angabe seiner Lage $x_m$ relativ zu einem Bezugspunkt identifiziert. Die gesuchte Position p der zu vermessenden Kante wird aus $p = x_m + x_k$ mit Subpixel-Genauigkeit bestimmt.

Fig. 8

**Beschreibung**

Die Erfindung betrifft ein Verfahren und ein Messgerät zur Positionsbestimmung einer zu vermessenden Kante eines Strukturelementes auf einem Substrat, bei dem aus einem Kamerabild der Kante ein ein-dimensionales Mess-Intensitätsprofil ermittelt und daraus die Position der Kante relativ zu einem Bezugspunkt bestimmt wird.

Die zu vermessenden Strukturelemente sind insbesondere opake oder transparente Bereiche auf Maskenoberflächen oder Strukturen auf Wafern, die für die Halbleiterherstellung verwendet werden. Die zu vermessenden Strukturelemente haben unterschiedliche Breiten und Längen und sind z.B. durch die Lage, Höhe und Orientierung ihrer Kanten unterscheidbar. Um die Position eines Strukturelementes auf dem Substrat anzugeben, werden häufig die zueinander parallelen Kantenlagen vermessen und als Position die Mittellinie zu den beiden Kanten angegeben. Bei einem nach Breite und Länge messbaren Strukturelement oder bei zwei sich kreuzenden Strukturelementen wird die Position durch die Koordinaten des Schnittpunktes beider Mittlinien angegeben. Der Bestimmung der Kantenposition kommt besondere Bedeutung zu, da Messfehler direkt in den Fertigungsprozess einfliessen. Daher wird von der Halbleiterindustrie eine Messgenauigkeit im Nanometerbereich verlangt.

Die Messung der Kantenpositionen erfolgt in speziellen Koordinaten-Messgeräten. Ein zur Durchführung des bekannten Verfahrens geeignetes Messgerät ist z.B. in dem im Education Program der Semicon Genf am 31.3.98 ausgegebenen Vortragsmanuskripts "Pattern Placement Metrology for Mask Making", Dr. Carola Bläsing, beschrieben.

Nachfolgend ist ein Beispiel für ein typisches Messgerät beschrieben. Das Substrat mit dem Strukturelement ist auf einem verschiebbaren Messtisch gelagert, dessen Position in einer Messebene relativ zu einem Bezugspunkt interferometrisch messbar ist. Ein Abbildungssystem ist mit seiner optischen Achse senkrecht zu der Messebene angeordnet und bildet einen Substratbereich mit dem Strukturelement vergrößert auf ein Detektorarray ab.

Die Pixel des Detektorarrays sind in Zeilen und Spalten parallel zu den Achsen eines dem Substrat zugeordneten x/y-Koordinatensystems ausgerichtet. Die Position der Kante des Strukturelementes wird relativ zu dem Bezugspunkt in dem auf dem Substrat definierten Koordinatensystem bestimmt, wobei als Bezugspunkt üblicherweise der Auftreffpunkt der optischen Achse des Abbildungssystems auf das Substrat dient. Das Detektorarray wird im allgemeinen so ausgerichtet, dass sein Zentrum mit dem Bezugspunkt zusammenfällt. Die Lage des Substrat-Koordinatensystems wird über Alignmentmarken relativ zum Messgeräte -Koordinatensystem ausgerichtet. Üblicherweise ist die Kante des zu vermessenden Strukturelements ebenfalls parallel oder senkrecht zu den Achsen des Masken-Koordinatensystems und damit auch zu den Zeilen und Spalten des Detektorarrays orientiert.

Das von dem Detektorarray aufgenommene Bild des Strukturelementes mit der Kante wird mit bildanalytischen Methoden ausgewertet. Mit Hilfe eines softwaremäßig generierten rechteckigen Messfensters wird ein bestimmter Bereich des Detektorarrays, d.h. ein Bildausschnitt, für die Messung ausgewählt. Das Messfenster wird vorzugsweise quer zu einer zu vermessenden Kante des Strukturelementes gelegt.

Durch das Auflösungsvermögen und die Abbildungsgüte des Abbildungssystems bedingt, ist der Kontrast des Kantenbildes unterschiedlich stark. Mit Hilfe eines TV-Autofokussystems wird der beste Kontrast eingestellt. Aus den Intensitäten der jeweils in einer Zeile oder Spalte parallel zur Kante des Strukturelementes liegenden Pixel innerhalb eines Messfensters wird ein Mittelwert gebildet. Senkrecht zur Kante ergibt sich daraus ein Intensitätsprofil der Kantenabbildung über einer Pixelzeile oder Pixelspalte. Dieses Intensitätsprofil ist anschaulich die Funktion der Intensität in Abhängigkeit vom Ort in Messrichtung, die senkrecht zur Kante definiert ist.

Die Lage der Kante wird beispielsweise durch einen vorbestimmten Kennwert dieses Intensitätsprofils definiert, z.B. bei 50% der Maximalintensität. Als resultierende Kantenlage wird die interpolierte Pixelzeile oder Pixelspalte angegeben, auf der die Kante relativ zum Bezugspunkt liegt. Die Bestimmung der Kantenposition erfolgt daher mit Pixelgenauigkeit.

Dabei kommt der Bestimmung der Kantenlage in dem errechneten Intensitätsprofil eine besondere Bedeutung zu. In bekannten Verfahren wird in dem Bereich eines Intensitätsprofils, der einen starken Anstieg bzw. Abfall der Intensität aufweist, eine Kante vermutet. In diesem Bereich wird mit den Einzelwerten des Intensitätsprofils ein Geradenfit durchgeführt. Das Problem besteht darin, dass, je nach Länge des gefitteten Bereichs und der damit variierenden Anzahl der beim Geradenfit verwendeten Einzelwerte des Intensitätsprofils, der Geradenfit unterschiedliche Steigungen annehmen kann. Bei unterschiedlichen Steigungen liegt aber der Kennwert für die Bestimmung der Kantenlage, der z.B. bei 50% der Maximal-Intensität liegt, an verschiedenen Stellen, d.h. Pixeln, die einer bestimmten Position auf dem Substrat entsprechen. Es ergibt sich also bereits bei der Berechnung des Geradenfits ein erheblicher Fehler bei der Kantenbestimmung.

Ein anderes Problem ergibt sich daraus, dass die gemessene Kurvenform des Intensitätsprofils u.a. von der Breite und Höhe der Strukturen und von der Abbildungsapertur abhängt. So ist es bei optischer Bildaufnahme vorteilhaft, wenn die Beleuchtungsapertur klein gegenüber der Beobachtungsapertur ist. Dadurch erzielt man eine maximale Steilheit des Intensitätsprofils am Ort der Kante, wodurch die Position besser definiert ist. Allerdings treten dann Überschwinger im Profilverlauf auf.

Bei sehr schmalen Strukturen treten im Intensitätsprofil Schattenlinien der Struktur auf, welche zusätzliche Minima liefern, die bei besonders schmalen Strukturlinien (z.B. auf Wafern) zusammenfallen. Mit der Methode des Geradenfits können lediglich die Positionen der äußeren Begrenzungen der Schattenlinien bestimmt werden. Eine zuverlässige Bestimmung der Position der tatsächlichen Kanten des Strukturelementes ist jedoch nicht möglich.

In der US 5,136,661 wird ein Verfahren zur Bestimmung der Kantenposition beschrieben. Das Verfahren gibt für die gesuchte Kante eine Gerade mit vorgegebener Steigung vor. Aus dem Bild der Struktur wird wie bekannt ein Intensitätsprofil bestimmt und darin für jede enthaltene Kante ein Mess-Geradenfit errechnet. Es werden verschiedene Bewertungsgrößen berechnet, die zur Auswahl derjenigen Kante dienen, deren Mess-Geradenfit die geringste Abweichung von der Modellkante aufweist. Die Auswahl der ähnlichsten Kante ist jedoch sehr kompliziert und rechenaufwendig. Sie setzt teilweise bereits Kenntnisse über die vorhandenen Strukturbreiten voraus (z.B. Sollbreiten aus dem Herstellungsprozess). Außerdem erfolgt die Bestimmung der Kantenlage nur mit Pixelgenauigkeit und das oben beschriebene Problem des Geradenfits an kritischen Intensitätsprofilen bleibt ungelöst.

Es ist daher Aufgabe dieser Erfindung, ein Verfahren zur Positionsbestimmung einer Kante eines Strukturelementes auf einem Substrat anzugeben, welches an beliebig strukturierten Kanten sehr präzise, schnelle und reproduzierbare Messungen der Kantenposition mit Subpixel-Genauigkeit, also auf wenige Nanometer genau, ermöglicht.

Diese Aufgabe wird gelöst durch ein Verfahren zur Positionsbestimmung einer zu vermessenden Kante eines Strukturelementes auf einem Substrat, bei dem aus einem Kamerabild der Kante ein ein-dimensionales Mess-Intensitätsprofil ermittelt und daraus die Position der Kante relativ zu einem Bezugspunkt bestimmt wird, und welches erfindungsgemäß durch die folgenden Verfahrensschritte gekennzeichnet ist:

a)    Ermitteln und Abspeichern eines vollständigen nichtlinearen, die zu vermessende Kante identifizierenden Modell-Intensitätsprofils einer Modell-Kante,

b)    Definieren einer gewünschten Modell-Kantenposition $x_k$ mit Subpixel-Genauigkeit in dem Modell-Intensitätsprofil,

c)    Aufnehmen eines aus Pixel-Zeilen und Pixel-Spalten bestehenden Kamerabildes der zu vermessenden Kante,

d)    Auflegen eines Messfensters auf das Kamerabild quer über die Kante,

e)    Bestimmen eines ein-dimensionalen Mess-Intensitätsprofils der Kante aus den Bildsignalen der Pixel des Messfensters,

f)    Identifizieren des Modell-Intensitätsprofils im Mess-Intensitätsprofil mit Angabe seiner Lage $x_m$ relativ zu einem Bezugspunkt,

g)    und Bestimmen der auf diesen Bezugspunkt bezogenen Position p der zu vermessenden Kante mit $p = x_m + x_k$ mit Subpixel-Genauigkeit.

Eine weitere Aufgabe der Erfindung besteht darin, ein Messgerät zur Positionsbestimmung einer zu vermessenden Kante an einer Struktur auf einem Substrat anzugeben, mit welcher an beliebig strukturierten Kanten sehr präzise, schnelle und reproduzierbare Messungen der Kantenposition mit Subpixel-Genauigkeit, also auf wenige Nanometer genau, durchgeführt werden können.

Diese Aufgabe wird gelöst durch ein Messgerät zur Positionsbestimmung einer zu vermessenden Kante eines Strukturelementes auf einem Substrat, welches eine Auflicht-Beleuchtungseinrichtung, eine Abbildungs-Einrichtung, eine Kamera zur Aufnehmen eines Kamerabildes der zu vermessenden Kante, einen horizontal xy-verschiebbaren Messtisch zur Aufnahme des Substrats, Mittel zum Auflegen eines rechteckigen Messfensters auf das Kamerabild quer über die Kante, Mittel zum Bestimmen eines ein-dimensionalen Mess-Intensitätsprofils des Querschnitts der Kante aus den Bildsignalen der Pixel des Messfensters und Mittel zum Bestimmen der Position p der Kante relativ zu einem Bezugspunkt aufweist, das folgende Merkmale aufweist:

a)    Mittel zum Ermitteln und Abspeichern eines vollständigen nichtlinearen, die zu vermessende Kante identifizierenden Modell-Intensitätsprofils einer Modell-Kante,

b)    Mittel zum Definieren einer gewünschten Kantenposition $x_k$ mit Subpixel-Genauigkeit in dem Modell-Intensitätsprofil,

c)    Mittel zum Identifizieren des Modell-Intensitätsprofils im Mess-Intensitätsprofil mit Angabe seiner Lage $x_m$ relativ zu einem Bezugspunkt,

d)  und Mittel zum Bestimmen der auf diesen Bezugspunkt bezogenen Position p der zu vermessenden Kante mit $p = x_m + x_k$ mit Subpixel-Genauigkeit.

Die Unteransprüche geben vorteilhafte Ausgestaltungen an.

Die Erfindung beruht auf der Idee, eine fertigungstechnisch möglichst gut gelungene Kante als Modellkante zum Auffinden und zur Vermessung weiterer Kanten desselben Typs heran zu ziehen. Von dieser Modellkante wird ein Modell-Intensitätsprofil erzeugt und in diesem eine gewünschte Modellkanten-Position $x_k$ mit Subpixel-Genauigkeit definiert. Es ist auch möglich, ein mathematisch simuliertes Modell-Intensitätsprofil zu verwenden. Dabei kann es sich beispielsweise um eine mehrdimensionale Fitfunktion zu realen Messwerten der Modellkante handeln.

Von einem Substrat mit Strukturelementen, deren Kanten vermessen werden sollen, wird ein Kamerabild aufgenommen. Im Kamerabild wird ein Messfenster (vorzugsweise quer) über eine zu vermessende Kante gelegt und daraus ein Mess-Intensitätsprofil bestimmt.

Erfindungsgemäß wird nun in diesem Mess-Intensitätsprofil das Modell-Intensitätsprofil identifiziert und seine Lage $x_m$ relativ zu einem Bezugspunkt bestimmt. Damit kann auch die Modellkanten-Position relativ zu dem Bezugspunkt angegeben werden. Sie ist gleich der gesuchten Position $p = x_m + x_k$ der zu vermessenden Kante relativ zu dem Bezugspunkt.

Das Verfahren bietet den Vorteil, dass nur bei solchen Kanten, zu deren Mess-Intensitätsprofilen ein passendes Modell-Intensitätsprofil gefunden wird, eine Bestimmung der Kantenposition erfolgt. Auf diese Weise können auch Substrate, z.B. Halbleiter-Masken, mit unterschiedlichen Strukturen und unterschiedlichen Kantentypen vermessen werden. Dazu werden vorher für die unterschiedlichen Kantentypen die jeweils charakterisierenden Modell-Intensitätsprofile mit den gewünschten Modell-Kantenpositionen ermittelt und abgespeichert. Dann kann beim Vermessen der realen, zu vermessenden Kanten das jeweils passende Modell-Intensitätsprofil bestimmt und zugeordnet werden und die gesuchte Positionen aller zu vermessenden Kanten mit Subpixel-Genauigkeit ermittelt werden. Damit ist auch eine automatische Vermessung von Strukturelementen auf Masken oder Wafern möglich.

Um das Modell-Intensitätsprofil in dem Mess-Intensitätsprofil zu identifizieren, wird in einer vorteilhaften Ausführungsform des Verfahrens auf mathematische Weise das Modell-Intensitätsprofil virtuell in Pixelschritten relativ zu dem Mess-Intensitätsprofil verschoben und festgestellt, in welcher Position die Übereinstimmung zwischen dem Modell-Intensitätsprofil und dem Mess-Intensitätsprofil maximal ist.

Dazu wird für alle bei den einzelnen Pixelschritten eingenommenen, fiktiven Positionen $x_j$ als Maß für die Übereinstimmung zwischen dem Modell-Intensitätsprofil und dem Mess-Intensitätsprofil ein Korrelationswert $K_j$ bestimmt. Folgende Formel kann für die Bestimmung der Korrelationswerte $K_j$ verwendet werden:

$$K_j = \frac{N \sum_{i=1}^{N}\left(P_{i+j} M_i\right) - \left(\sum_{i=1}^{N} P_{i+j}\right)\left(\sum_{i=1}^{N} M_i\right)}{\sqrt{\left(N \sum_{i=1}^{N}\left(P_{i+j}\right)^2 - \left(\sum_{i=1}^{N} P_{i+j}\right)^2\right)\left(N \sum_{i=1}^{N} M_i^{\,2} - \left(\sum_{i=1}^{N} M_i\right)^2\right)}}$$

Dabei bedeuten die Formelzeichen:

P = Intensitätswert eines Pixels des Mess-Intensitätsprofils,
M = Intensitätswert eines Pixels des Modell-Intensitätsprofils ,
i = 1...N = Pixel des Modell-Intensitätsprofils.

Dabei bezeichnet j für die jeweils aktuelle fiktive Position $x_j$ dasjenige Pixel im Mess-Intensitätsprofil, an dem das erste Pixel i = 1 des Modell-Intensitätsprofils auf dem Mess-Intensitätsprofil liegt.

Dabei gibt der höchste Korrelationswert $K_j$ die beste Übereinstimmung an. Allerdings können hohe Korrelationswerte $K_j$ auch durch Rauschanteile des Mess-Intensitätsprofils erzeugt werden, wenn ihr Kurvenverlauf durch das Modell-Intensitätsprofil beschrieben wird. Dazu werden erfindungsgemäß die hohen Korrelationswerte $K_j$, die von Intensitätsverläufen im Rauschen verursacht wurden, von der weiteren Auswertung ausgeschlossen.

Die Auswertung der Korrelationswerte $K_j$ kann unterschiedlich erfolgen. So kann aus den diskreten Korrelationswerten $K_j$ eine Korrelationsfunktion K(x) aufgestellt und deren Maxima bestimmt werden.

Dazu wird entweder die Korrelationskurve K(x) selbst auf Maxima untersucht, wobei die vom Rauschen verursachten lokalen Maxima aussortiert werden. Aus dem verbleibenden, der gesuchten Kante zugeordneten Maximum $x_m$ wird die Position der zu vermessenden Kante mit $p = x_m + x_k$ bestimmt.

Oder es wird die Ableitung $\Delta K(x)$ der Korrelationskurve $K(x)$ bestimmt und deren Nullstellen bestimmt, wobei die vom Rauschen verursachten Nullstellen aussortiert werden. Aus der verbleibenden, der gesuchten Kante zugeordneten Nullstelle $x_m$ wird die Position der zu vermessenden Kante mit $p = x_m + x_k$ bestimmt.

Es ist auch möglich, die Korrelationswerte direkt, also ohne Aufstellen einer Korrelationskurve, auszuwerten. Dazu wird ein unterer Grenzwert für die auszuwertenden Korrelationswerte festgelegt. Für die Korrelationswerte, die den Grenzwert übersteigen, wird mindestens ein lokaler Parabelfit aufgestellt. Liegen mehrere Gruppen von Korrelationswerten oberhalb des Grenzwertes, werden mehrere Parabelfits aufgestellt. Die lokalen Maxima der Parabelfits werden mit Subpixel-Genauigkeit bestimmt. Diejenigen lokalen Maxima, die von Intensitätsverläufen im Rauschen verursacht wurden, werden aussortiert. Aus dem verbleibenden, von der zu vermessenden Kante verursachten lokalen Maximum $x_m$ wird die gesuchte Kantenposition $p$ mit $p = x_m + x_k$ bestimmt.

In einer anderen Variante des Verfahrens werden die Gradienten $\triangle K_j = K_j - K_{j+1}$ für jeden Korrelationswert $K_j$ ermittelt. Dann wird in der Umgebung aller möglichen Nullstellen ein Geradenfit berechnet, wobei der Geradenfit jeweils mit einer Gruppe von $\Delta K_j$ erfolgt, von denen mindestens ein Wert $\triangle K_j$ größer als Null und einer kleiner als Null ist. Die Nullstellen der Geradenfits werden bestimmt und diejenigen Nullstellen, die von Intensitätsverläufen im Rauschen verursacht wurden, werden aussortiert. Die gesuchten Kantenposition $p$ wird aus der verbleibenden Nullstelle $x_m$, die nicht vom Rauschen sondern von der zu vermessenden Kante verursacht wurde, mit $p = x_m + x_k$ bestimmt.

In einer weiteren Ausführungsform des Verfahrens werden lokale Parabelfits in der Umgebung derjenigen diskreten Korrelationswerte $K_j$ bestimmt, deren benachbarte Korrelationswerte $K_{j-1}$ und $K_{j+1}$ kleinere Werte aufweisen. Die lokalen Maxima der lokalen Parabelfits werden mit Subpixel-Genauigkeit bestimmt. Dann werden diejenigen lokalen Maxima, die von Intensitätsverläufen im Rauschen verursacht wurden, vor der weiteren Auswertung aussortiert. Die gesuchte Kantenposition $p$ wird aus dem verbleibenden, von der zu vermessenden Kante verursachten lokalen Maximum $x_m$ mit $p = x_m + x_k$ bestimmt .

Mit dem beschriebenen Verfahren kann an einem Strukturelement, dessen rechte und linke Kanten zueinander spiegelbildlich sind, eine Bestimmung der Positionen beider Kanten mithilfe nur eines vorher bekannten Modell-Intensitätsprofils erfolgen. Ist beispielsweise ein Modell-Intensitätsprofil, welches die linke Kante identifizieren kann, vorgegeben, wird zunächst die linke Kante mit dem bereits beschriebenen Verfahren gefunden und ihre Position mit Subpixel-Genauigkeit bestimmt. Dann wird das Modell-Intensitätsprofil gespiegelt, so dass ein die rechte Kante identifizierendes zweites Modell-Intensitätsprofil gebildet wird. Mit diesem zweiten Modell-Intensitätsprofil wird dann die rechte Kante, welche zu der linken Kante symmetrisch ist, gefunden und ihre Position mit Subpixel-Genauigkeit bestimmt.

Aus dem erfindungsgemäßen Verfahren ergeben sich weitere vorteilhafte Anwendungen.

So kann ein Substrat mit mehreren zu vermessenden Kanten vermessen werden, indem mehrere verschiedene nichtlineare, die unterschiedlichen Kantentypen identifizierende Modell-Intensitätsprofile für unterschiedliche Modellkanten ermittelt und abgespeichert werden. In jedem einzelnen Modell-Intensitätsprofil wird eine gewünschte Kantenposition $x_k$ mit Subpixel-Genauigkeit definiert. Dann wird von dem Substrat mit mehreren zu vermessenden Kanten mindestens ein Mess-Intensitätsprofil ermittelt. Die verschiedenen Modell-Intensitätsprofile werden im Mess-Intensitätsprofil identifiziert, wobei zu jedem im Mess-Intensitätsprofil gefundenen Modell-Intensitätsprofil seine Lage $x_m$ relativ zu dem Bezugspunkt angegeben wird. Die Position $p$ jeder mittels ihres zugeordneten Modell-Intensitätsprofils identifizierten Kante wird mit $p = x_m + x_k$ mit Subpixel-Genauigkeit bestimmt.

In einer weiteren Ausführungsform des Verfahrens werden ebenfalls mehrere verschiedene nichtlineare Modell-Intensitätsprofile für unterschiedliche Modellkanten ermittelt und abgespeichert. Die gewünschten Kantenposition $x_k$ in jedem einzelnen der Modell-Intensitätsprofile wird mit Subpixel-Genauigkeit definiert. Von einem Substrat mit einer zu vermessenden Kante, deren Model-Intensitätsprofil vorher bestimmt wurde, wird ein eindimensionales Mess-Intensitätsprofil ermittelt. Das richtige, der zu vermessenden Kante zugeordnete Modell-Intensitätsprofil wird aus der Menge der vorher ermittelten Modell-Intensitätsprofile im Mess-Intensitätsprofil ermittelt, wobei zu dem im Mess-Intensitätsprofil gefundenen Modell-Intensitätsprofil seine Lage $x_m$ relativ zu dem Bezugspunkt angegeben wird. Die Position $p$ der mittels ihres zugeordneten Modell-Intensitätsprofils identifizierten Kante wird mit $p = x_m + x_k$ mit Subpixel-Genauigkeit berechnet.

Das erfindungsgemäße Verfahren ermöglicht die Messung der Position der Kanten von Strukturelementen selbst bei schwierigen Randbedingungen, wie z.B. sehr schmalen Strukturen, sehr eng beieinander liegenden Strukturen, die komplizierte Mess-Intensitätsprofile ergeben. Eine Positionsbestimmung ist zuverlässig und mit Subpixel-Genauigkeit möglich.

Ein Ausführungsbeispiel der Erfindung wird nachfolgend anhand der schematischen Zeichnungen näher erläutert. Es zeigen:

**Fig. 1:** ein Flussdiagramm des erfindungsgemäßen Verfahrens;

**Fig. 2:** ein schematisches Kamerabild eines Strukturelementes mit einer Modellkante;

*Fig. 3:* ein von der Modellkante abgeleitetes Modell-Intensitätsprofil;

*Fig. 4:* ein Modell-Intensitätsprofil mit definierter Modell-Kantenposition $x_k$;

*Fig. 5:* Mess-Intensitätsprofil einer realen, zu vermessenden Kante eines Strukturelementes;

*Fig. 6:* Position des identifizierten Modell-Intensitätsprofils im gemessenen Intensitätsprofil;

*Fig. 7:* Bestimmung der Kantenposition im gemessenen Intensitätsprofil;

*Fig. 8:* Parabelfit durch diskrete Korrelationswerte;

*Fig. 9:* Messgerät zur Positionsbestimmung einer zu vermessenden Kante eines Strukturelementes auf einem Substrat.

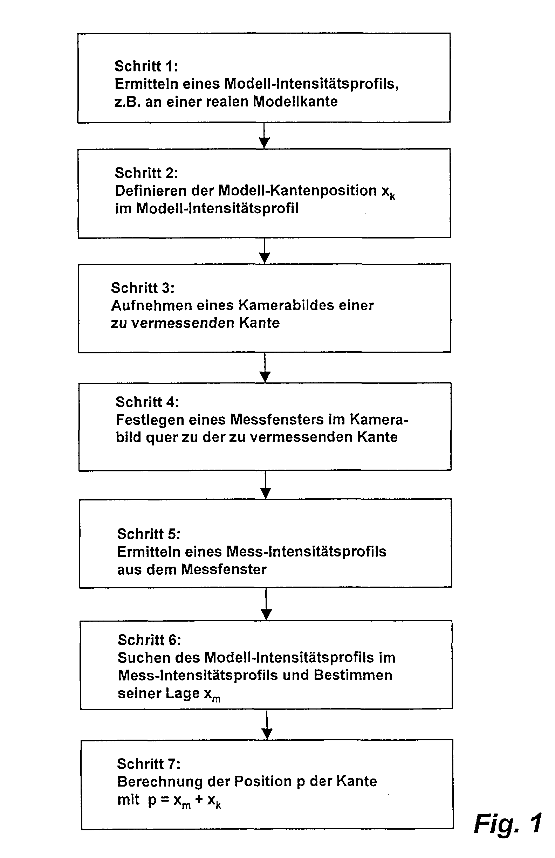

*Fig.1* zeigt ein Flussdiagramm des erfindungsgemäßen Verfahrens. Es weist sieben Verfahrensschritte auf, die nachfolgend beschrieben werden.

In einem **ersten Schritt** des erfindungsgemäßen Verfahrens wird ein vollständiges nichtlineares, die zu vermessende Kante identifizierendes Modell-Intensitätsprofil einer Modell-Kante ermittelt und abgespeichert.

Das Modell-Intensitätsprofil kann auf verschiedene Weise ermittelt werden.

Eine Möglichkeit besteht darin, ein Intensitätsprofil einer realen Modellkante zu messen und einen Profilteilbereich des gemessenen Intensitätsprofils als Modell-Intensitätsprofil zu entnehmen. Dazu wird zunächst ein aus in Zeilen und Spalten angeordneten Pixeln bestehendes Kamerabild eines Modellsubstrats aufgenommen, das eine Modellkante aufweist, welche in ihren Parametern den zu vermessenden Kanten entspricht. Dabei müssen dieselben optischen Messparameter verwendet werden, die nachher bei der Messung der durch die Modellkante identifizierbaren, zu vermessenden Kante verwendet werden sollen. Dadurch wird gewährleistet, dass von gleichartigen Kanten auch gleiche (oder annähernd gleiche) Intensitätsprofile aufgenommen werden.

Auf das Kamerabild des Modellsubstrats wird ein rechteckiges Messfenster aufgelegt und ein ein-dimensionales Intensitätsprofil des Modellsubstrats aus den Bildsignalen der Pixel des Messfensters ermittelt. Aus diesem Intensitätsprofil wird ein nichtlinearer Profilteilbereich, der die Modellkante identifiziert, als Modell-Intensitätsprofil entnommen und abgespeichert.

Zusätzlich ist es möglich, zu dem so ermittelten Modell-Intensitätsprofil einen Polynomfit aufzustellen und die Werte des Polynomfits für die Berechnung der Korrelationswerte $K_j$ zu verwenden.

Eine andere Möglichkeit, ein Modell-Intensitätsprofil zu bestimmen, besteht darin, das Modell-Intensitätsprofil der Modell-Kante nicht durch Messung, sondern durch mathematische Simulation zu erzeugen. So kann beispielsweise ein Polynomfit zu dem Modell-Intensitätsprofil der Modell-Kante aufgestellt werden und die Werte des Polynomfits für die Berechnung der Korrelationswerte $K_j$ verwendet werden. Diese Methode setzt für die Berechnung brauchbarer Simulationsrechnungen allerdings sehr genaue Kenntnisse über die später zu vermessenden Kanten, deren Substrate und die Messoptik voraus.

In einem **zweiten Schritt** des Verfahrens wird eine gewünschte Kantenposition $x_k$ mit Subpixel-Genauigkeit in dem Modell-Intensitätsprofil definiert. Das heißt, dass die gewünschte Kantenposition ohne Berücksichtigung der Pixelbreite an einer beliebigen Stelle des Modell-Intensitätsprofils ausgewählt werden kann. Beispielsweise kann das Modell-Intensitätsprofil vergrößert auf einem Monitor eines Rechners dargestellt werden. Dann kann durch Verfahren eines Cursors die gewünschte Kantenposition im Modell-Intensitätsprofil angefahren und beispielsweise durch Mausclick mit einer Computermaus ausgewählt werden.

In einem **dritten Schritt** des Verfahrens wird ein aus Pixel-Zeilen und Pixel-Spalten bestehendes Kamerabild der zu vermessenden Kante aufgenommen.

In einem **vierten Schritt** des Verfahrens wird ein Messfenster auf das Kamerabild quer über die Kante aufgelegt. Das Messfenster legt einen Ausschnitt des Kamerabildes mit der zu vermessenden Kante fest, aus dem das ein-dimensionale Mess-Intensitätsprofil ermittelt wird. Das Messfenster kann entweder durch Hardware (z.B. durch eine optisches oder ein elektronisches Fenster oder einen Bildausschnitt bzw. Zoom der Kamera) oder durch Software realisiert werden. Das Messfenster ist vorzugsweise rechteckig und wird mit seiner längeren Seite quer zu der vermessenden Kante ausgerichtet.

In einem **fünften Schritt** des Verfahrens wird ein ein-dimensionales Mess-Intensitätsprofil der Kante aus den Bildsignalen der Pixel des Messfensters bestimmt. Zur Bestimmung des ein-dimensionalen Mess-Intensitätsprofils sind verschiedene Methoden bekannt, die unter anderem von der Ausrichtung des Messfensters auf dem Substrat bzw. im Kamerabild abhängen.

So erfolgt beispielsweise, wenn die Pixel-Spalten des Messfenster in Längsrichtung der zu vermessenden Kante verlaufen, die Bestimmung eines ein-dimensionalen Mess-Intensitätsprofils in Zeilenrichtung durch Addieren der Spalten-Pixelwerte.

Wenn jedoch die Pixel-Zeilen des Messfenster in Längsrichtung der zu vermessenden Kante verlaufen, erfolgt die Bestimmung eines ein-dimensionalen Mess-Intensitätsprofils in Spaltenrichtung durch Addieren der Zeilen-Pixelwerte.

Zusätzlich kann noch eine Mittelwertbildung der Intensitätswerte bei der Bestimmung des Intensitätsprofils erfolgen. So erfolgt, wenn die Pixel-Zeilen des Messfenster in Längsrichtung der zu vermessenden Kante verlaufen, die Bestimmung eines ein-dimensionalen Mess-Intensitätsprofils in Spaltenrichtung durch Addieren und Mittelwertbildung der Zeilen-Pixelwerte.

Wenn jedoch die Pixel-Spalten des Messfenster in Längsrichtung der zu vermessenden Kante verlaufen, erfolgt die Bestimmung eines ein-dimensionalen Mess-Intensitätsprofils in Zeilenrichtung durch Addieren und Mittelwertbildung der Spalten-Pixelwerte.

In einem **sechsten Schritt** des Verfahrens wird das Modell-Intensitätsprofil im Mess-Intensitätsprofil mit Angabe seiner Lage $x_m$ relativ zu einem Bezugspunkt identifiziert. Beispielsweise wird die Lage $x_m$ des Modell-Intensitätsprofils durch die Position des ersten Pixels des Modell-Intensitätsprofils im Mess-Intensitätsprofil angegeben.

Zur Identifizierung des Modell-Intensitätsprofils im Mess-Intensitätsprofil wird in einer Variante des Verfahrens beispielsweise das Modell-Intensitätsprofil schrittweise, d.h. pixelweise, rechnerisch über dem Mess-Intensitätsprofil an virtuelle Positionen verschoben. Für jede virtuelle Position j wird als Maß für die Güte der Übereinstimmung zwischen Modell-Intensitätsprofil und Mess-Intensitätsprofil ein Korrelationswert $K_j$ bestimmt.

Die virtuelle Positionen mit maximalen Korrelationswerten kommen als Orte in Frage, an denen das Modell-Intensitätsprofil mit dem Mess-Intensitätsprofil übereinstimmt, woraus man die Position der zu vermessenden Kante bestimmen kann. Bei der Auswahl müssen diejenigen Maxima der Korrelationswerte, die vom Rauschen verursacht werden, aussortiert werden.

Eine Möglichkeit besteht darin, dass ein maximaler Wert für die Intensität des Rauschens der Korrelationswerte $K_j$ bestimmt wird und diesem ein Korrelationsgrenzwert $K_{min}$ zugeordnet wird und dass diejenigen lokalen Maxima, die unterhalb dieses Korrelationsgrenzwertes $K_{min}$ liegen, vor der Bestimmung der gesuchten Kantenposition p aussortiert werden.

Eine weitere Möglichkeit besteht darin, aus den Korrelationswerten $K_j$ eine Korrelationsfunktion $K(x)$ zu bestimmen und deren Ableitung und die Nullstellen der Ableitung zu berechnen. Dann wird ein maximaler Wert für die Intensität des Rauschens der Korrelationswerte $K_j$ bestimmt und dieser ein Korrelationsgrenzwert $K_{min}$ zugeordnet. Dann werden diejenigen Nullstellen, deren zugeordnete Werte der Korrelationsfunktion $K(x)$ unterhalb dieses Korrelationsgrenzwertes $K_{min}$ liegen, vor der Bestimmung der gesuchten Kantenposition p aussortiert.

In einem **siebenten Schritt** des Verfahrens wird die Position p der zu vermessenden Kante mit $p = x_m + x_k$ mit Subpixel-Genauigkeit bestimmt. Die Position p der Kante ergibt sich mit Subpixel-Genauigkeit, da die Festlegung der $x_k$ der Modellkante im Modell-Intensitätsprofil beliebig mit Subpixel-Genauigkeit erfolgt.

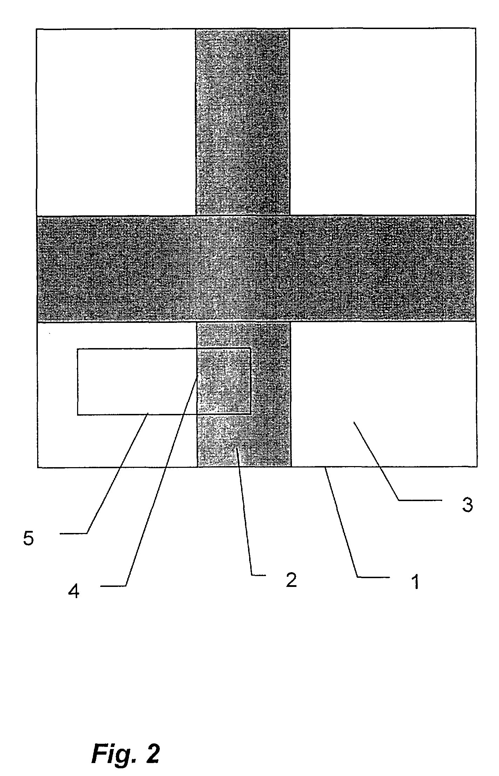

*Fig. 2* zeigt als Beispiel ein schematisches Kamerabild 1 einer Modell-Struktur 2, die im Kamerabild 1 als zwei gekreuzte, dunkle Balken gegen einen hellen Untergrund, d. h. das Substrat 3, erscheint. Bei dem Substrat 3 kann es sich beispielsweise um das Glassubstrat einer Halbleiter-Maske oder einen Wafer handeln. In diesem Beispiel wird die linke Kante des senkrechten Balkens der Modell-Struktur 2 als Modellkante 4 benutzt. Ein Messfenster 5 ist quer zu der Modellkante 4 im Kamerabild 1 angeordnet. Das Kamerabild setzt sich aus Pixeln (nicht dargestellt) zusammen, die in Zeilen und Reihen angeordnet sind.

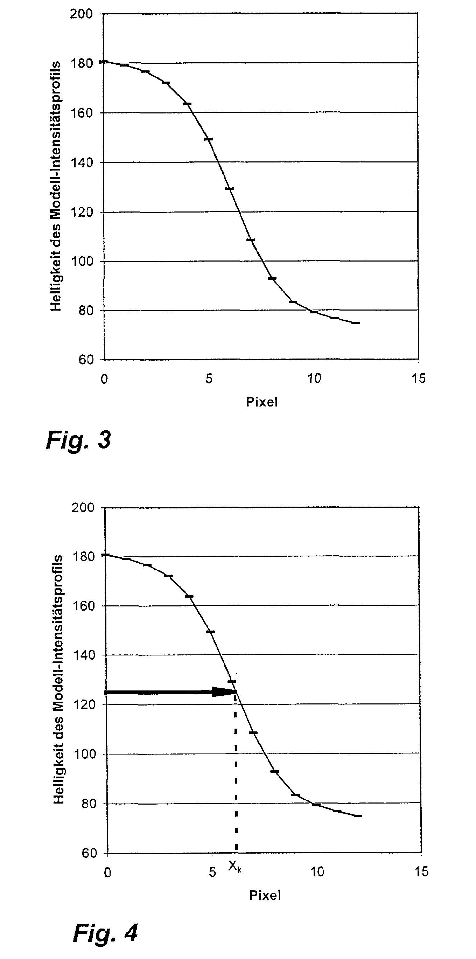

*Fig. 3* zeigt ein von der Modellkante 4 aus *Fig. 2* abgeleitetes Modell-Intensitätsprofil, das aus den Pixeln des Messfensters 5 berechnet wurde. Das Modell-Intensitätsprofil weist im linken Teil hohe Intensitätswerte auf, die aus dem hellen Untergrund, d.h. dem Substrat 3, resultieren. Im rechten Teil weist das Modell-Intensitätsprofil niedrige Helligkeitswerte auf, die durch den senkrechten dunklen Balken der Modell-Struktur 3 verursacht wurden. Im mittleren Teil weist das Modell-Intensitätsprofil eine Flanke, d. h. einen Abfall der Intensitätswerte, auf. Im Bereich dieser Flanke liegt die Position der Modellkante 4. Aus Kenngrößen der Produktion der Modell-Struktur 3, aus vorangegangenen Vergleichsmessungen und aus mathematischen Betrachtungen kann nun ein Sollwert für die Position der Modellkante 4 vorgegeben werden.

*Fig. 4* zeigt das Modell-Intensitätsprofil aus *Fig. 3* mit einer solchen definierten Kantenposition $x_k$ der Modellkante 4. Diese dient bei dem erfindungsgemäßen Verfahren zur Bestimmung der Kantenposition an realen, noch zu vermessenden Kanten.

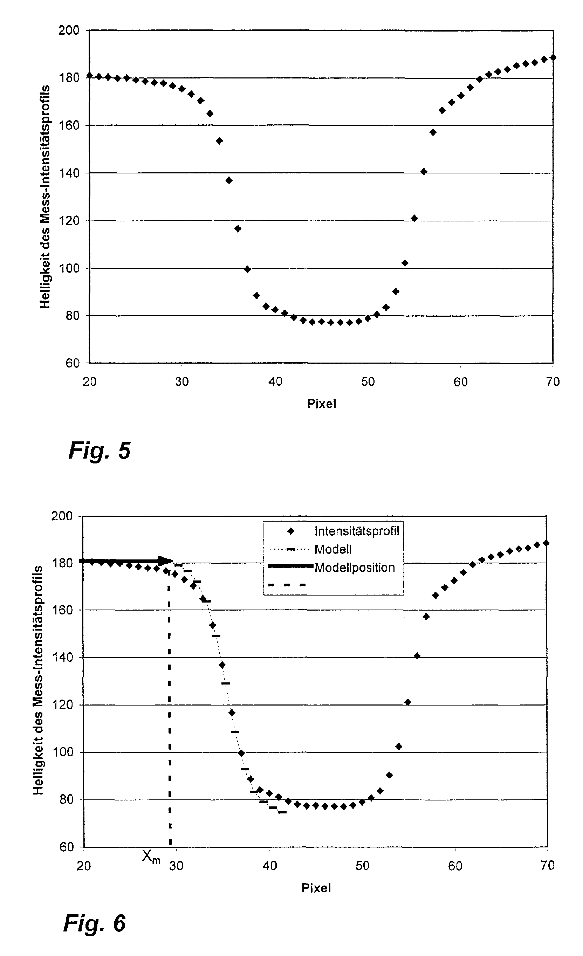

*Fig. 5* zeigt ein gemessenes Mess-Intensitätsprofil, das an einer realen, zu vermessenden Kante eines Strukturelementes ermittelt wurde. Dazu wurde ein Kamerabild der zu vermessenden Kante aufgenommen und ein rechteckiges Messfenster auf das Kamerabild quer über die Kante gelegt. Dann wurde ein ein-dimensionales Mess-Intensitätsprofil des Querschnitts der Kante aus den Bildsignalen der Pixel des Messfensters errechnet.

*Fig. 6* zeigt die Position $x_m$ des identifizierten Modell-Intensitätsprofils im gemessenen Mess-Intensitätsprofil. Anschaulich gesagt, wurde dazu das Modell-Intensitätsprofil in Pixelschritten über dem Mess-Intensitätsprofil verschoben und der Ort der größten Übereinstimmung bestimmt. Mathematisch beschrieben: es wurde zu jeder angenommenen Position des Modell-Intensitätsprofils ein Korrelationswert bestimmt. Die Position des Modell-Intensitätsprofils im gemessenen Mess-Intensitätsprofil entspricht dann dem Pixelwert mit dem größten Korrelationswert (wobei vom Rauschen verursachte Maxima der Korrelationswerte bereits außer acht gelassen wurden).

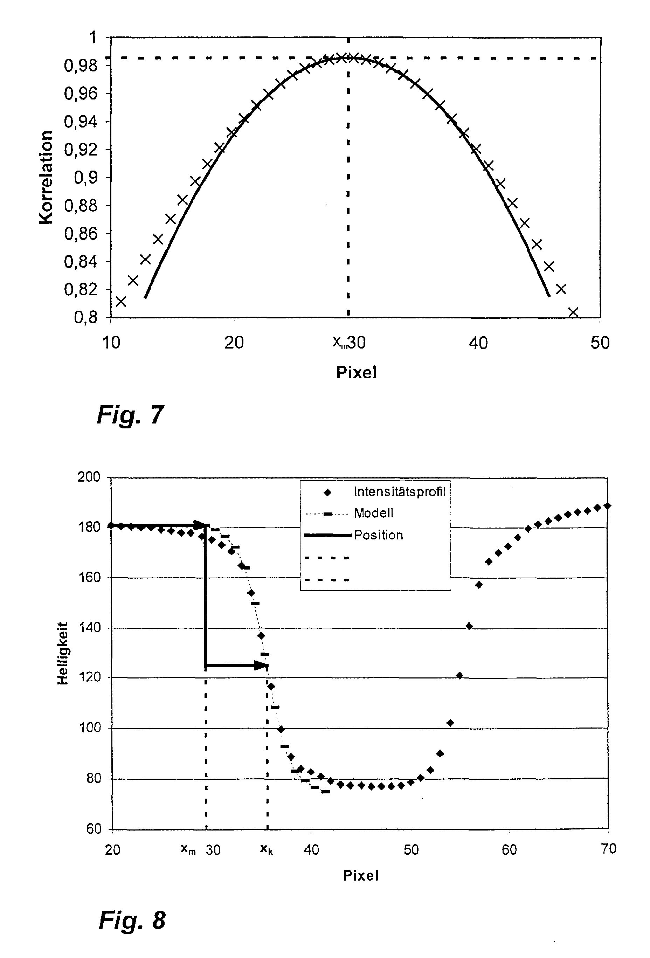

Dazu zeigt *Fig. 7* als Beispiel einen Parabelfit (gezeigt als durchzogene Linie) durch diskrete Korrelationswerte an bestimmten Pixeln. Jeder ermittelte diskrete Korrelationswert ist als kleines Kreuz dargestellt. Die Kreuze sind daher im Pixelabstand angeordnet. Als Ort der besten Korrelation wird das Maximum des Parabelfits bestimmt. Der ermittelte Maximalwert $K_{max}$ der Korrelationswerte liegt zwischen zwei Pixeln. Aus dem Parabelfit kann seine Position $x_m$ mit Subpixel-Genauigkeit bestimmt werden.

*Fig. 8* zeigt die erfindungsgemäß ermittelte Kantenposition $p = x_m + x_k$ der zu vermessenden Kante im Mess-Intensitätsprofil. Da die Position $x_k$ der Modellkante im Modell-Intensitätsprofil vorher definiert wurde, konnte damit die Position p der real gesuchten Kante gefunden werden.

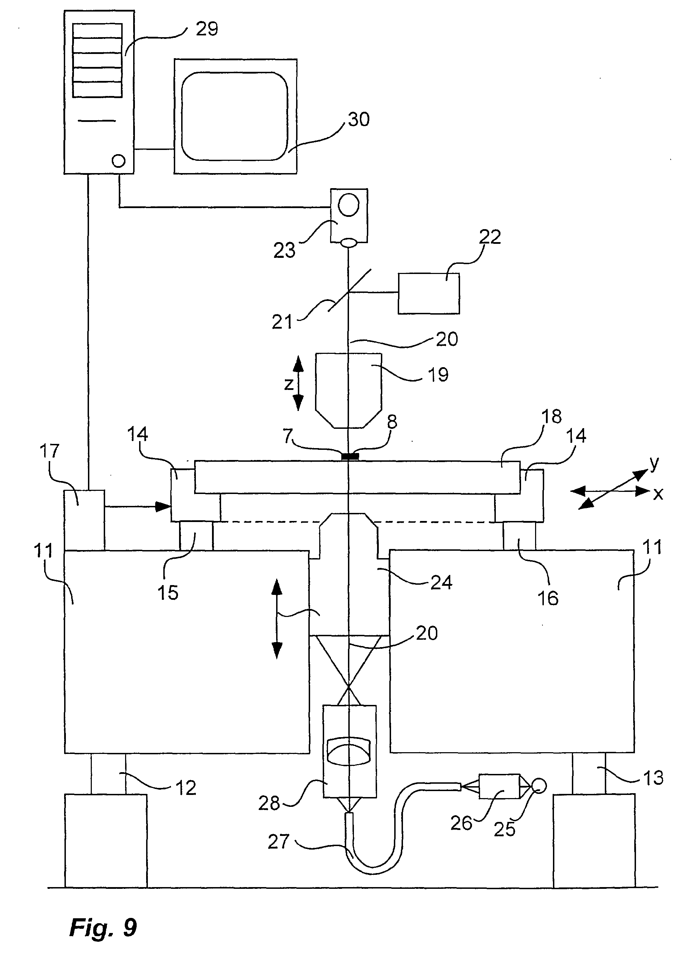

*Fig. 9* zeigt ein Messgerät 6 zur Positionsbestimmung einer zu vermessenden Kante eines Strukturelementes.

Das Messgerät 6 weist einen Granitblock 11 auf, der auf Schwingungsdämpfern 12, 13 gelagert ist. Auf dem Granitblock 11 ist ein als Rahmen ausgebildeter Messtisch 14 auf Luftlagern 15, 16 in x- und y-Richtung (in der Zeichnung durch zwei Pfeile angedeutet) gleitend verschiebbar. Der Rahmen des Messtisches 14 besteht vorteilhafterweise aus einer Glaskeramik mit geringem thermischen Ausdehnungskoeffizienten. Die Antriebselemente zum Verfahren des Messtisches 14 sind nicht dargestellt. Die Position des Messtisches 14 wird mit einem Laser-Interferometer-System 17 in x- und y-Richtung gemessen.

In den Rahmen des Messtisches 14 ist eine Maske 18 eingelegt. Die Maske 18 besteht z.B. aus Quarzglas. Auf der Maskenoberfläche ist ein Strukturelement 9 mit einer zu messenden Kante 7 aufgebracht, deren Position bestimmt werden soll. Da der Messtisch 14 als Rahmen ausgebildet ist, kann die Maske 8 auch von unten her durchleuchtet werden.

Oberhalb der Maske 18 befindet sich als Abbildungssystem ein Objektiv 19 hoher optischer Güte, das zur Fokussierung längs seiner optischen Achse 20 in z-Richtung verstellbar ist. Die optische Achse 20 definiert den Bezugspunkt für die Messung der relativen Position der Kante 7.

Über einen Teilerspiegel 21 wird zum einen das Licht einer Auflicht-Lichtquelle 22 in den optischen Strahlengang eingeleitet und zum anderen werden die Abbildungsstrahlen auf eine Kamera 23 gelenkt. Die Auflicht-Lichtquelle 22 emittiert beispielsweise im nahen UV-Spektralbereich. Mittels der Kamera 23 wird ein Bild der Kante 7 des Strukturelementes 8 aufgenommen, aus dem die Position der Kante 7 als Koordinaten auf der Maske 18 bestimmt. Als Kamera wird beispielsweise eine CCD-Kamera mit hochauflösendem Pixelarray eingesetzt. Es sind jedoch auch andere hochauflösende Detektor-Einrichtungen verwendbar, sofern aus deren Bildsignalen ein Intensitätsprofil für ein Messfenster innerhalb des Kamerabildes bestimmt werden kann.

In den Granitblock 11 ist eine weitere Beleuchtungseinrichtung eingesetzt, die einen höhenverstellbaren Kondensor 24 und eine Durchlicht-Lichtquelle 25 umfasst. Die optische Achse des Kondensors 24 fluchtet mit der optischen Achse 20 des Objektivs 19. Das Licht der Durchlicht-Lichtquelle 25 wird mittels einer Einkoppeloptik 26 in einen Lichtwellenleiter 27 eingekoppelt. Das aus dem Lichtwellenleiter 27 austretende Licht wird mittels einer Auskoppeloptik 28 von dem Lichtwellenleiter 27 abgenommen und in den Kondensor 24 eingestrahlt.

Die Höhenverstellung des Kondensors 24 mit Durchlicht-Lichtquelle 25 dient der Anpassung der auf das Strukturelement 8 zu richtenden Beleuchtungsstrahlen an unterschiedliche optische Dicken von Masken 18. Der Kopf des Kondensors 24 kann insbesondere in den offenen Rahmen des Messtischs 14 hineinreichen. Zum Schutz vor Beschädigungen bei Tischverschiebungen über die gesamte Maskenfläche kann der Kondensor 24 aber auch unter die Oberfläche des Granitblocks 11 gezogen werden. Die Lichtquellen 22 und 25 sind voneinander unabhängig einschaltbar.

Dem Messgerät 6 ist ein Computer 29 zugeordnet, der mit der Kamera 23 und dem Laser-Interferometer-System 17 verbunden ist. Weiterhin ist ein Monitor 30 mit dem Computer 29 verbunden. Der Monitor 30 dient zur Darstellung des mit der Kamera 23 aufgenommenen Bildes. Auf dem Computer 29 ist ein Computerprogramm installiert, welches die Verfahrensschritte zur Messung der Position der Kante 7 steuert und durchführt.

Die beschriebene Ausführungsform eines Messgeräts zur Positionsbestimmung der zu vermessenden Kante 7 bietet die Möglichkeit, entweder mit Auflicht oder mit Durchlicht zu beleuchten und zu messen. Es ist selbstverständlich auch möglich, eine Vorrichtung nur mit einer Auflicht-Beleuchtung oder nur mit einer Durchlicht-Beleuchtung auszustatten.

Nachfolgend wird eine Messung der Position der Kante 7 mittels des Messgeräts 6 beschrieben.

Vor der eigentlichen Positionsbestimmung der zu vermessenden Kante 7 des Strukturelementes 8 wird in einem **ersten Verfahrensschritt** zunächst ein vollständiges nichtlineares, die zu vermessende Kante 7 identifizierendes Modell-Intensitätsprofils einer Modell-Kante ermittelt und abgespeichert. Im vorliegenden Fall wurde ein Intensitätsprofil einer realen Modellkante einer Modell-Struktur (nicht dargestellt) gemessen und ein Profilteilbereich des ermittelten Intensitätsprofils als Modell-Intensitätsprofil entnommen.

Dazu wird zunächst mit der Kamera 23 von einem Modell-Substrat (nicht dargestellt) mit einer Modellkante ein aus Pixel-Zeilen und Pixel-Spalten bestehendes Kamerabild der Modellkante aufgenommen. Dabei werden dieselben optischen Messparameter verwendet, die bei der Messung der durch die Modellkante identifizierbaren, zu vermessenden Kante 7 verwendet werden sollen. Durch die Verwendung derselben optischen Messparameter wird gewährleistet, dass von gleichartigen Kanten auch gleiche (oder annähernd gleiche) Intensitätsprofile aufgenommen werden.

Die Bildsignale des Kamerabildes werden von der Kamera 23 auf den Computer 29 übertragen. Mittels des Computerprogramms oder durch einen Benutzer wird auf das Kamerabild des Modellsubstrats ein rechteckiges Messfenster aufgelegt. Der eigentliche Bildausschnitt kann entweder durch Hardware (z.B. durch eine optisches oder ein elektronisches Fenster oder einen Bildausschnitt bzw. Zoom der Kamera) oder mittels eines Computerprogramms durch Auswahl aus den Daten der Bildsignalen realisiert werden. Das Messfenster ist vorzugsweise rechteckig und wird mit seiner längeren Seite quer zu der vermessenden Kante ausgerichtet.

Aus den Bildsignalen der Pixel des Messfensters wird mittels des Computerprogramms ein ein-dimensionales Intensitätsprofil des Modellsubstrats ermittelt. Aus diesem Intensitätsprofil wird ein nichtlinearer Profilteilbereich, der die Modellkante identifiziert, als Modell-Intensitätsprofil entnommen und abgespeichert.

In einem **zweiten Schritt** des Verfahrens wird eine gewünschte Kantenposition $x_k$ mit Subpixel-Genauigkeit in dem Modell-Intensitätsprofil definiert. Dies kann durch einen Benutzer erfolgen oder automatisch mittels einer Funktion des Computerprogramms in dem Computer 29. Die gewünschte, ideale Kantenposition kann ohne Berücksichtigung der Pixelbreite an einer beliebigen Stelle des Modell-Intensitätsprofils ausgewählt werden. Beispielsweise kann das Modell-Intensitätsprofil vergrößert auf dem Monitor 30 dargestellt werden. Dann kann ein Benutzer durch Verfahren eines Cursors auf dem Monitor 30 die gewünschte Kantenposition im Modell-Intensitätsprofil anfahren und beispielsweise durch Mausclick mit einer Computermaus oder einer anderen Cursor-Steuerungsvorrichtung (nicht dargestellt) auswählen.

In einem **dritten Schritt** des Verfahrens wird - wie in der Figur dargestellt - die Maske 18 auf den Messtisch 14 aufgelegt. Nun wird mit der Kamera 23 ein aus Pixel-Zeilen und Pixel-Spalten bestehendes Kamerabild der zu vermessenden Kante 7 aufgenommen.

In einem **vierten Schritt** des Verfahrens wird in dem auf dem Monitor 30 dargestellten Kamerabild ein Messfenster quer über die Kante aufgelegt. Das Messfenster legt einen Ausschnitt des Kamerabildes mit der zu vermessenden Kante 7 fest. Wie bereits bei der Erstellung des Modell-Intensitätsprofils beschrieben, kann das Messfenster durch einen Benutzer oder durch das Computerprogramm festgelegt werden.

In einem **fünften Schritt** des Verfahrens berechnet der Computer 29 unter Benutzung des Computerprogramms ein ein-dimensionales Mess-Intensitätsprofil der Kante 7 aus den Bildsignalen der Pixel des gewählten Messfensters. Das Mess-Intensitätsprofil beschreibt den Intensitätsverlauf im Kamerabild der Kante 7 quer zu dieser Kante 7.

In einem **sechsten Schritt** des Verfahrens wird mittels des Computerprogramms mit dem Computer 29 ermittelt, an welcher Stelle des Mess-Intensitätsprofils das Modell-Intensitätsprofil erscheint bzw. enthalten ist. Das heißt, das Modell-Intensitätsprofil wird in dem Mess-Intensitätsprofil identifiziert und lokalisiert. Dabei wird die Lage $x_m$ des Modell-Intensitätsprofils im Mess-Intensitätsprofil relativ zu einem Bezugspunkt, z. b. der optischen Achse 20 , bestimmt. Beispielsweise kann als Lage $x_m$ des Modell-Intensitätsprofils angegeben werden, an welcher Stelle (gegeben durch den Pixelwert) des Mess-Intensitätsprofils das erste Pixel des Modell-Intensitätsprofils erscheint.

In einem **siebente Schritt** des Verfahrens wird durch den Computer mittels des Computerprogramms die Position p der zu vermessenden Kante bestimmt. Sie ergibt sich aus der Addition der Lage $x_m$ des Modell-Intensitätsprofils im Mess-Intensitätsprofil relativ zu einem Bezugspunkt und der Position $x_k$ der Modellkante im Modell-Intensitätsprofil mit $p = x_m + x_k$ . Die Position p der Kante ergibt sich mit Subpixel-Genauigkeit, da die Auswahl der Position $x_k$ der Modellkante im Modell-Intensitätsprofil beliebig mit Subpixel-Genauigkeit vorgenommen wurde.

Die vorliegende Erfindung ist in Bezug auf Ausführungsbeispiele beschrieben worden. Es ist jedoch für jeden auf diesem Fachgebiet tätigen Fachmann offensichtlich, dass Änderungen und Abwandlungen vorgenommen werden können, ohne dabei den Schutzbereich der nachstehenden Ansprüche zu verlassen.

**Bezugszeichenliste**

1. Kamerabild
2. Modell-Struktur
3. Substrat
4. Modellkante
5. Messfenster

6.     Messgerät
7.     Kante
8.     Strukturelement
11.    Granitblock
12.    Schwingungsdämpfer
13.    Schwingungsdämpfer
14.    Messtisch
15.    Luftlager
16.    Luftlager
17.    Laser-Interferometer-System
18.    Maske
19.    Objektiv
20.    optische Achse
21.    Teilerspiegel
22.    Auflicht-Lichtquelle
23.    Kamera
24.    Kondensor
25.    Durchlicht-Lichtquelle
26.    Einkoppel-Optik
27.    Lichtwellenleiter
28.    Auskoppel-Optik
29.    Computer
30.    Monitor

**Patentansprüche**

**1.** Verfahren zur Positionsbestimmung einer zu vermessenden Kante eines Strukturelementes auf einem Substrat, bei dem aus einem Kamerabild der Kante ein ein-dimensionales Mess-Intensitätsprofil ermittelt und daraus die Position p der Kante relativ zu einem Bezugspunkt bestimmt wird, **gekennzeichnet durch** die Verfahrensschritte,

    a)    Ermitteln und Abspeichern eines vollständigen nichtlinearen, die zu vermessende Kante identifizierenden Modell-Intensitätsprofils einer Modell-Kante,

    b)    Definieren einer gewünschten Kantenposition $x_k$ mit Subpixel-Genauigkeit in dem Modell-Intensitätsprofil,

    c)    Aufnehmen eines aus Pixel-Zeilen und Pixel-Spalten bestehenden Kamerabildes der zu vermessenden Kante,

    d)    Auflegen eines rechteckigen Messfensters auf das Kamerabild quer über die Kante,

    e)    Bestimmen eines ein-dimensionalen Mess-Intensitätsprofils des Querschnitts der Kante aus den Bildsignalen der Pixel des Messfensters,

    f)    Identifizieren des Modell-Intensitätsprofils im Mess-Intensitätsprofil mit Angabe seiner Lage $x_m$ relativ zu einem Bezugspunkt,

    g)    und Bestimmen der auf diesen Bezugspunkt bezogenen Position p der zu vermessenden Kante mit p = $x_m$ + $x_k$ mit Subpixel-Genauigkeit.

**2.** Verfahren nach Anspruch 1,
**dadurch gekennzeichnet, dass**
es folgende weitere Verfahrensschritte aufweist:

    a) mathematisches, virtuelles Verschieben des Modell-Intensitätsprofils in Pixel-Schritten an relativ zu dem Bezugspunkt gelegene, fiktive Positionen $x_j$ (j = Pixelindex) auf dem Mess-Intensitätsprofil, wobei das Pixel j den fiktiven Ort des ersten Intensitätswerts des Modell-Intensitätsprofils angibt, und Bestimmen eines diskre-

ten Korrelationswertes $K_j$ für jede eingenommene, fiktive Position $x_j$,

b) Aufstellen einer Korrelationsfunktion $K(x)$ aus den diskreten $K_j$, wobei $K_j \cong K(x)$ an den Pixeln j ist,

c) Bestimmen der lokalen Maxima der Korrelationsfunktion $K(x)$ mit Subpixel-Genauigkeit,

d) Aussortieren derjenigen lokalen Maxima der Korrelationswerte $K_j$, die von Intensitätsverläufen im Rauschen verursacht wurden,

e) und Bestimmen der gesuchten Kantenposition p aus dem verbleibenden lokalen Maximum $x_m$, das von der zu vermessenden Kante verursacht wurde, mit $p = x_m + x_k$ .

3. Verfahren nach Anspruch 1,
   **dadurch gekennzeichnet, dass**
   es folgende weitere Verfahrensschritte aufweist:

   a) mathematisches, virtuelles Verschieben des Modell-Intensitätsprofils in Pixel-Schritten an relativ zu dem Bezugspunkt gelegene, fiktive Positionen $x_j$ (j = Pixelindex) auf dem Mess-Intensitätsprofil, wobei das Pixel j den fiktiven Ort des ersten Intensitätswerts des Modell-Intensitätsprofils angibt, und Bestimmen eines diskreten Korrelationswertes $K_j$ für jede eingenommene, fiktive Position $x_j$,

   b) Aufstellen einer Korrelationsfunktion $K(x)$ aus den diskreten $K_j$, wobei $K_j \cong K(x)$ an den Pixeln j ist,

   c) Bilden der Ableitung $\Delta K(x)$ der Korrelationsfunktion $K(x)$ und Bestimmen der Nullstellen der Ableitung $\Delta K(x)$,

   d) Aussortieren derjenigen Nullstellen, die von Intensitätsverläufen im Rauschen verursacht wurden,

   e) und Bestimmen der gesuchten Kantenposition p aus der verbleibenden Nullstelle $x_m$ , die nicht vom Rauschen sondern von der zu vermessenden Kante verursacht wurde, mit $p = x_m + x_k$ .

4. Verfahren nach den Ansprüchen 1 bis 3,
   **gekennzeichnet durch**
   Berechnung der Korrelationswerte $K_j$ gemäß

$$K_j = \frac{N \sum_{i=1}^{N} \left(P_{i+j} M_i\right) - \left(\sum_{i=1}^{N} P_{i+j}\right)\left(\sum_{i=1}^{N} M_i\right)}{\sqrt{\left(N \sum_{i=1}^{N} \left(P_{i+j}\right)^2 - \left(\sum_{i=1}^{N} P_{i+j}\right)^2\right)\left(N \sum_{i=1}^{N} M_i^{\,2} - \left(\sum_{i=1}^{N} M_i\right)^2\right)}}$$

   wobei

   - P einen Intensitätswert eines Pixels des Mess-Intensitätsprofils,
   - M einen Intensitätswert eines Pixels des Modell-Intensitätsprofils und
   - i = 1...N die Pixel des Modell-Intensitätsprofils angeben,
     und wobei
   - j das Pixel im Mess-Intensitätsprofil bezeichnet, an dem das erste Pixel i = 1 des Modell-Intensitätsprofils für die jeweils aktuelle fiktive Position auf dem Mess-Intensitätsprofil liegt.

5. Verfahren nach Anspruch 1,
   **dadurch gekennzeichnet, dass**
   das Modell-Intensitätsprofil ermittelt wird durch die Verfahrensschritte:

   a) Aufnehmen eines aus in Zeilen und Spalten angeordneten Pixeln bestehenden Kamerabildes eines eine Modellkante aufweisenden Modellsubstrats mit denselben optischen Messparametern, die nachher bei der Messung der durch die Modellkante identifizierbaren, zu vermessenden Kante verwendet werden sollen,

   b) Auflegen eines rechteckigen Messfensters auf das Kamerabild des Modellsubstrats,

   c) Bestimmen eines ein-dimensionalen Intensitätsprofils des Modellsubstrats aus den Bildsignalen der Pixel des Messfensters,

   d) Entnehmen eines nichtlinearen, die Modellkante identifizierenden Teilbereichs aus diesem Intensitätsprofil als Modell-Intensitätsprofil.

6. Verfahren nach Anspruch 1,

**dadurch gekennzeichnet, dass**
das Modell-Intensitätsprofil durch mathematische Simulation der Modell-Kante ermittelt wird.

7. Verfahren nach Anspruch 1,
**dadurch gekennzeichnet,**
**dass** die Vermessung der Position von mindestens zwei zu einander spiegelsymmetrischen Kanten durch folgende Verfahrensschritte erfolgt:

a) Ermitteln und Abspeichern eines vollständigen nichtlinearen, eine dieser Kanten identifizierenden, ersten Modell-Intensitätsprofils,
b) Bestimmen der Position mindestens einer Kante mittels des ersten Modell-Intensitätsprofils,
c) Spiegeln des ersten Modell-Intensitätsprofils und Abspeichern des gespiegelten ersten Modell-Intensitätsprofils als zweites, einer fiktiven gespiegelten Modellkante zugeordnetes Modell-Intensitätsprofil,
d) Bestimmen der Position mindestens einer Kante, die zu den bereits vermessenen spiegelsymmetrisch ist, mittels des zweiten Modell-Intensitätsprofils.

8. Verwendung eines Messgeräts zur Ausübung des Verfahrens nach Anspruch1, wobei das Messgerät aufweist:

a) eine Auflicht-Beleuchtungseinrichtung (10, 13), eine Abbildungs-Einrichtung (10) und eine Kamera (14) zur Aufnehmen eines Kamerabildes der zu vermessenden Kante,

b) einen horizontal xy-verschiebbaren Messtisch (4) zur Aufnahme des Substrats (8),

c) Mittel zum Auflegen eines rechteckigen Messfensters auf das Kamerabild quer über die Kante und ,

d) Mittel zum Bestimmen eines ein-dimensionalen Mess-Intensitätsprofils des Querschnitts der Kante aus den Bildsignalen der Pixel des Messfensters,

e) Mittel zum Ermitteln und Abspeichern eines vollständigen nichtlinearen, die zu vermessende Kante identifizierenden Modell-Intensitätsprofils einer Modell-Kante,

f) Mittel zum Definieren einer gewünschten Kantenposition $x_k$ mit Subpixel-Genauigkeit in dem Modell-Intensitätsprofil,

g) Mittel zum Identifizieren des Modell-Intensitätsprofils im Mess-Intensitätsprofil mit Angabe seiner Lage $x_m$ relativ zu einem Bezugspunkt,

h) und Mittel zum Bestimmen der auf diesen Bezugspunkt bezogenen Position p der zu vermessenden Kante mit $p = x_m + x_k$ mit Subpixel-Genauigkeit.

9. Messgerät nach Anspruch 8, **dadurch gekennzeichnet, dass**
die Mittel zum Ermitteln und Abspeichern eines Modell-Intensitätsprofils, die Mittel zum Definieren einer gewünsch-ten Kantenposition $x_k$, die Mittel zum Identifizieren des Modell-Intensitätsprofils im Mess-Intensitätsprofil und die Mittel zum Bestimmen der Position p der zu vermessenden Kante (7) mindestens einen Computer (29) und mindestens ein Computerprogramm zur Durchführung der Verfahrensschritte nach Anspruch 1 umfassen.

10. Computerprogrammprodukt mit Programm-Code-Mitteln, welches bei einem Messgerät (6) nach Anspruch 8 zur Positionsbestimmung einer zu vermessenden Kante (7) eines Strukturelementes auf einem Substrat (8) die folgenden Verfahrensschritte

a) Ermitteln und Abspeichern eines vollständigen nichtlinearen, eine die zu vermessende Kante (7) identifizierenden Modell-Intensitätsprofils einer Modell-Kante,

b) Definieren einer gewünschten Kantenposition $x_k$ mit Subpixel-Genauigkeit in dem Modell-Intensitätsprofil,

c) Aufnehmen eines aus Pixel-Zeilen und Pixel-Spalten bestehenden Kamerabildes der zu vermessenden Kante (7),

d) Auflegen eines rechteckigen Messfensters auf das Kamerabild quer über die Kante (7),

e) Bestimmen eines ein-dimensionalen Mess-Intensitätsprofils des Querschnitts der Kante (7) aus den Bildsignalen der Pixel des Messfensters,

f) Identifizieren des Modell-Intensitätsprofils im Mess-Intensitätsprofil mit Angabe seiner Lage $x_m$ relativ zu einem Bezugspunkt,

g) und Bestimmen der auf diesen Bezugspunkt bezogenen Position p der zu vermessenden Kante mit $p = x_m + x_k$ mit Subpixel-Genauigkeit

steuert und durchführt, wenn das Computerprogramm auf einem Computer ausgeführt wird, der dem Messgerät (6) zugeordnet ist.

Schritt 1:
Ermitteln eines Modell-Intensitätsprofils,
z.B. an einer realen Modellkante

Schritt 2:
Definieren der Modell-Kantenposition $x_k$
im Modell-Intensitätsprofil

Schritt 3:
Aufnehmen eines Kamerabildes einer
zu vermessenden Kante

Schritt 4:
Festlegen eines Messfensters im Kamerabild quer zu der zu vermessenden Kante

Schritt 5:
Ermitteln eines Mess-Intensitätsprofils
aus dem Messfenster

Schritt 6:
Suchen des Modell-Intensitätsprofils im
Mess-Intensitätsprofils und Bestimmen
seiner Lage $x_m$

Schritt 7:
Berechnung der Position p der Kante
mit $p = x_m + x_k$

**Fig. 1**

**Fig. 2**

**Fig. 3**

**Fig. 4**

## Fig. 5

## Fig. 6

**Fig. 7**

**Fig. 8**

Fig. 9